# EUROPÄISCHE PATENTSCHRIFT

(11) **EP 2 481 629 B1**
(45) Veröffentlichungstag und Bekanntmachung des Hinweises auf die Patenterteilung: **15.11.2017**
(21) Anmeldenummer: 12002191.0
(22) Anmeldetag: 02.07.2008
(51) Int. Cl.: B60N 2/30, B60N 2/01, B60N 2/06, B60N 2/07, B60N 2/075, B60N 2/015

(54) **Fahrzeugsitz mit Sicherungsmittel für ein Unterstützungselement**
Vehicle seat with securing means for a support element
Siège de véhicule doté d'un moyen de fixation pour un élément de support

(30) Priorität: 05.07.2007 DE 102007031454; 16.11.2007 DE 102007055081
(43) Veröffentlichungstag der Anmeldung: 01.08.2012
(62) Teilanmeldung aus: 08773808.4
(73) Patentinhaber: Adient Luxembourg Holding S.à r.l., 2453 Luxembourg (LU)
(72) Erfinder: Woolston, Stuart, East Kilbride G75 8TZ Glasgow (GB); Flucht, Stefan, 42699 Solingen (DE); Szegeny, Peter, 51371 Leverkusen (DE)
(74) Vertreter: Wolff, Felix

(56) Entgegenhaltungen:
- EP-A- 1 449 710
- EP-A- 1 493 624
- EP-A1- 1 498 303
- JP-A- 2002 225 603
- US-A- 808 679

## Beschreibung

Die vorliegende Erfindung betrifft einen Fahrzeugsitz mit mindestens einem ersten Segment, einem zweiten Segment und einem Mittelsegment, wobei das erste Segment, das zweite Segment und das Mittelsegment jeweils Sitzteile aufweisen. Das Sitzteil des Mittelsegments ist dabei unter dem Sitzteil des ersten Segments in einer Verstaustellung verstaubar. In einer Gebrauchsstellung ist das Mittelsegment mit dem zweiten Segment mittels eines Unterstützungselements in Kontakt, wobei das Mittelsegment das Unterstützungselement aufweist (siehe z.B. die EP 1 449 710 A2, dem Oberbegriff entsprechend). Derartige Fahrzeugsitze sind aus dem Stand der Technik bekannt. In der nicht veröffentlichten Patentanmeldung DE 10 2007 013 376.8 wird beispielsweise ein Fahrzeugsitz mit einem verstaubaren Mittelsitzteil offenbart. In der Druckschrift EP 1 449 710 A2 wird ebenfalls ein Fahrzeugsitz mit einem verstaubaren Sitzteil eines Mittelsegments offenbart, wobei ein Bügel das Sitzteil des Mittelsegments abstützt. Der Bügel ist klappbar an der Sitzstruktur befestigt und stützt sich in der Gebrauchsstellung am Fahrzeugboden auf. Hierfür weist der klappbare Bügel vertikal eine lange und damit unstabile Strebe auf und ist zudem durch den Klappmechanismus verschleißanfällig und wackelig. Die bisher bekannten Unterstützungselemente für das Mittelsegment haben somit den Nachteil, dass sie insbesondere in einem Crash wegrutschen oder einknicken. Ein plötzliches einklappen oder wegrutschen des Unterstützungselements führt jedoch zu einem einknicken des Mittelsegmentsitzteils und somit zu einem erhöhten Verletzungsrisiko eines Fahrzeuginsassens, der auf diesem sitzt.

Es war daher die Aufgabe der vorliegenden Erfindung einen Fahrzeugsitz vorzusehen, bei dem auch im Crash-Fall ein Unterstützungselement das Mittelsegmentsitzteil sicher abstützt. Trotzdem sollte das Unterstützungselement möglichst wenig Bauraum einnehmen und robust ausgestaltet sein.

Gelöst wird die Aufgabe durch einen Fahrzeugsitz mit mindestens einem ersten Segment, einem zweiten Segment und einem Mittelsegment, wobei alle Segmente jeweils ein Sitzteil aufweisen. Das Sitzteil des Mittelsegments (Mittelsegmentsitzteil) ist dabei in einer Verstaustellung unter dem Sitzteil des ersten Segments verstaubar. In einer Gebrauchsstellung ist das Mittelsegment mit dem ersten Segment verbunden und steht mit dem zweiten Segment über ein Unterstützungselement in Kontakt. Das Mittelsegment weist das Unterstützungselement auf. Um beispielsweise bei einem Crash eine ungewollte Bewegung des Unterstützungselements und somit des Mittelsegmentsitzteils zu verhindern, wird das Unterstützungselement mittels mindestens einem Sicherungsmittels bezüglich einer Bewegung in eine Z-Richtung und eine Y-Richtung gesichert.

Es war für einen Fachmann nicht zu erwarten, dass das Unterstützungselement durch mindestens ein Sicherungsmittel auch bei einem Crash bezüglich einer Bewegung in eine Z-Richtung und eine Y-Richtung gehalten wird. Vorzugsweise umfasst das mindestens eine Sicherungsmittel ein erstes Sicherungsmittel und ein zweites Sicherungsmittel.

Bevorzugt verhindert das erste Sicherungsmittel dabei eine Bewegung des Unterstützungselements in Y-Richtung, also eine Bewegung im Wesentlichen senkrecht zur Sitzfläche des Mittelsegmentsitzteils. Weiterhin bevorzugt verhindert das zweite Sicherungsmittel eine Bewegung des Unterstützungselements in Z-Richtung, also eine Bewegung quer zur Längserstreckung des Mittelsegmentsitzteils. Selbst bei einem Crash verbleibt das Unterstützungselement somit im Wesentlichen in der gleichen Position bezüglich des zweiten Segments. In vorteilhafter Weise kann hierdurch ein ungewolltes Absenken des Mittelsegmentsitzteils gegenüber dem Sitzteil des zweiten Segments oder ein Einklappen in Richtung des ersten Segments verhindert werden.

Das erste und das zweite Segment umfassen bevorzugt zum einen jeweils ein Sitzteil und zum anderen jeweils eine Rückenlehne. Das Mittelsegment ist zwischen dem ersten und dem zweiten Segment angeordnet und umfasst ebenfalls ein Sitzteil und eine Rückenlehne. Das Mittelsegmentsitzteil und die Rückenlehne des Mittelsegments sind jedoch bevorzugt schmaler ausgebildet als die des ersten oder des zweiten Segments und/oder die Rückenlehne des Mittelsegments ist kollabierbar ausgebildet.

Bevorzugt weist die Sitzstruktur des Mittelsegments auf der Seite zum zweiten Segment das Unterstützungselement auf. Die Sitzstruktur des Mittelsegments ist weiterhin bevorzugt über ein Scharnier mit dem Sitzteil des ersten Segments verbunden und kann zusammen mit diesem längsverstellt werden. Durch das Scharnier kann das Mittelsegmentsitzteil zudem in Richtung des Sitzteils des ersten Segments verklappt werden, um unterhalb dessen Sitzteils verstaut zu werden (Verstaustellung). Das Scharnier stabilisiert beziehungsweise hält jedoch auch die zum ersten Segment angrenzende Seite des Mittelsegmentsitzteils. Die hierzu gegenüberliegende Seite des Mittelsegmentssitzteils stützt sich über das Unterstützungselement auf dem zweiten Segment auf. Besonders bevorzugt steht dabei das Unterstützungselement mit der Sitzstruktur des zweiten Segments in Kontakt.

Unter der Sitzstruktur eines Sitzteils soll bevorzugt sowohl die Tragestruktur des Polsterträgers als auch Befestigungsschienen, Konsolen oder sonstige Unterkonstruktionen des Fahrzeugsitzes verstanden werden.

Bevorzugt geht das Unterstützungselement mit dem ersten und/oder mit dem zweiten Sicherungsmittel in der Gebrauchsstellung eine form- und/oder kraftschlüssige Verbindung ein. Besonders bevorzugt muss zunächst eine form- und/oder kraftschlüssige Verbindung zwischen dem ersten Sicherungsmittel und dem Unterstützungselement gelöst werden, bevor eine form- und/oder kraftschlüssige Verbindung zwischen dem zweiten Sicherungsmittel und dem Unterstützungselement gelöst werden kann. Erst wenn zwischen dem Unterstützungselement und den Sicherungsmitteln keine form- und/oder kraftschlüssige Verbindung mehr besteht, kann das Mittelsegmentsitzteil bevorzugt in die Verstaustellung überführt werden. Durch die form- und/oder kraftschlüssige Verbindung zwischen den Sicherungsmitteln und dem Unterstützungselement wird bevorzugt das Unterstützungselement an einer Bewegung in Z- und Y- Richtung gehindert, wobei zum Verlassen der Gebrauchsstellung zwei Sicherungsmittel gelöst werden müssen. Unter einer Gebrauchsstellung des Mittelsegmentsitzteils soll bevorzugt verstanden werden, wenn ein Fahrzeuginsasse darauf Platz nehmen kann. In diesem Fall steht weiterhin bevorzugt die Rückenlehne des Mittelsegments im Wesentlichen aufrecht auf dem Mittelsegmentsitzteil, damit sich der gleiche Fahrzeuginsasse daran anlehnen kann.

Weiterhin bevorzugt weist die Sitzstruktur des zweiten Segments eine Führungsschiene auf, in der ein Schlitten führbar ist. Der Schlitten wiederum weist bevorzugt die Sicherungsmittel auf. Das Unterstützungselement ist dabei durch die form- und/oder kraftschlüssige Verbindung mit den Sicherungsmitteln mit dem Schlitten in Kontakt. Mittels des Schlittens und der Führungsschiene sind das Mittelsegmentsitzteil und das Sitzteil des zweiten Segments gegeneinander längsverstellbar. Wird beispielsweise das Sitzteil des ersten Segments längsverstellt, so verstellt sich durch die Verbindung mit dem Scharnier das Mittelsegmentsitzteil entsprechend mit und gleitet mit dem Schlitten in der Führungsschiene entlang. Hierdurch wird eine Längsverstellung gegenüber dem Sitzteil des zweiten Segments erreicht.

Vorzugsweise können die form- und/oder kraftschlüssigen Verbindungen zwischen dem Unterstützungselement und den Sicherungsmitteln nur in einer vorbestimmten Position der Sitzteile zueinander und/oder durch die Betätigung eines zusätzlichen Aktuierungsmittels gelöst werden. Ohne die Verwendung eines Aktuierungsmittels muss bezüglich der einzunehmenden vorbestimmten Position sichergestellt werden, dass diese Position nicht versehentlich eingenommen werden kann. Beispielsweise ist es möglich, dass die form- und/oder kraftschlüssigen Verbindungen nur gelöst werden, wenn alle drei Sitzteile eine gleiche vorbestimmte Längsverstellung aufweisen und/oder zusätzlich ein Aktuierungsmittel betätigt wird. Ein solches Aktuierungsmittel kann beispielsweise eine Handhabe sein, die mit einem Bowdenzug verbunden ist, der ein Verriegelungsmechanismus deaktiviert. Durch die einzunehmende vorbestimmte Position und/oder das Aktuierungsmittel wird vorteilhaft verhindert, dass die Sicherung des Unterstützungselements ungewollt gelöst wird.

Bevorzugt ist das Unterstützungselement in einem ersten, zur vorliegenden Erfindung nicht gehörenden Ausführungsbeispiel gabelförmig mit einer Ausnehmung. Das zweite Sicherungsmittel ist bevorzugt als Pilzkopf-Bolzen ausgebildet, wobei die Ausnehmung des gabelförmigen Unterstützungselements den Pilzkopf-Bolzen umfasst. Der Kopf des Pilzkopf-Bolzen verhindert dabei eine Bewegung des Unterstützungselements quer zur Längsausstreckung des Sitzteils (Z-Richtung), da die Ausnehmung nicht über den Kopf hinweg verschoben werden kann.

Weiterhin weist das Unterstützungselement bevorzugt eine Nase auf, die mit dem ersten Sicherungsmittel in der Gebrauchsstellung zusammenwirkt. Das erste Sicherungsmittel ist hierbei vorzugsweise eine drehbare Doppelnocke mit einem ersten und einem zweiten Nockenteil. Der erste Nockenteil wirkt dabei form- und/oder kraftschlüssig mit der Nase des Unterstützungselements zusammen und verhindert eine Bewegung im Wesentlichen senkrecht zur Sitzfläche des Sitzteils (Y-Richtung). Der zweite Nockenteil wirkt bevorzugt mit der Führungsschiene zusammen und ist vorzugsweise in Richtung der Führungsschiene durch ein Federmittel vorgespannt. Soll das Mittelsegmentsitzteil in der Gebrauchsstellung verschoben werden, so bewegt sich durch die Verbindung zwischen dem Unterstützungselement und den Sicherungsmitteln der Schlitten innerhalb der Führungsschiene. Hierdurch wird die Verstellung des Mittelsegmentsitzteiles besonders leichtgängig und gleichzeitig wird das Mittelsegmentsitzteil optimal gestützt.

Für eine Verstellung von einer Gebrauchsstellung in eine Verstaustellung werden das Mittelsegmentsitzteil und das Sitzteil des zweiten Segments bevorzugt in die vorbestimmte Position zueinander gebracht. In dieser Position kann der zweite Nockenteil in eine Kerbe der Führungsschiene eingreifen, wodurch sich der gesamte Doppelnocken von dem Unterstützungselement weg dreht. Hierdurch besteht nicht länger die form- und/oder kraftschlüssige Verbindung zwischen dem ersten Nockenteil und der Nase des Unterstützungselements. Das Mittelsegmentsitzteil kann dann zusammen mit dem Unterstützungselement angehoben und in Richtung des Sitzteils des ersten Segments verklappt werden. Die Position der Kerbe in der Führungsschiene ist dabei abhängig von der zu wählenden vorbestimmten Position. Denkbar sind auch zwei oder eine Vielzahl von Kerben in der Führungsschiene, durch die zwei oder eine Vielzahl von vorbestimmten Positionen zur Überführung in der Verstaustellung ermöglicht werden.

Bei einer anderen, zur vorliegenden Erfindung gehörenden Ausführungsform ist das Unterstützungselement als Bügel ausgebildet, wobei sich das Unterstützungselement mit einem Kontaktbereich auf einer Leiste des Fahrzeugsitzes abstützt. Die Leiste ist an der Sitzstruktur des Sitzteils des zweiten Segments befestigt. Egal in welcher Längsverstellung die Sitzteile des zweiten Segments und des Mittelsegments in der Gebrauchsstellung zueinander sind, liegt immer in etwa die Hälfte des Kontaktbereichs des Unterstützungselements auf der Leiste auf. Wird beispielsweise das Sitzteil des zweiten Segments in die hinterste Stellung der Längsverstellung gestellt und das Mittelsegmentsitzteil ist zusammen mit dem Sitzteil des ersten Segments in der vordersten Stellung der Längsverstellung, so liegt immer noch etwa die Hälfte des Kontaktbereichs des Unterstützungselements auf der Leiste an dem zweiten Segment auf. Hierdurch wird das Mittelsegmentsitzteil in jeder Position der Sitzteile zueinander sicher abgestützt, wodurch ein ungewolltes Absenken oder Verkippen des Mittelsegmentsitzteils verhindert wird. Zudem werden eine Beschädigung des Unterstützungselements durch eine zu geringe Auflagefläche des Kontaktbereichs und dadurch entstehende große Kräfte durch Hebelwirkungen verringert.

Bevorzugt entspricht die Länge des Kontaktbereichs in etwa der Hälfte der Länge der Sitzstruktur des zweiten Segments. Bevorzugt ist die Länge des horizontalverlaufenden Kontaktbereichs wesentlich größer als die senkrecht verlaufende Bügelstruktur des Unterstützungselements. Die Leiste weist zudem bevorzugt eine Länge auf, die in etwa der Länge der Sitzstruktur des zweiten Segments entspricht.

Vorzugsweise weist die Sitzstruktur des zweiten Segments ein Halteelement auf und dieses Halteelement wiederum weist die Leiste auf.

Weiterhin bevorzugt weist die Leiste Dämpfungseigenschaften auf, so dass keine störenden Klappergeräusche entstehen, wenn das Unterstützungselement - beispielsweise im Fahrbetrieb - auf die Leiste aufschlägt. Weiterhin weist die Leiste bevorzugt Materialeigenschaften auf, die das Gleiten des Kontaktbereichs auf der Leiste erleichtern. So wird vorteilhaft die Verstellung des Mittelsegmentsitzteils oder des Sitzteils des zweiten Segments leichtgängiger.

Vorzugsweise ist das Halteelement im Wesentlichen U-förmig ausgebildet, wobei das Unterstützungselement mit seinem Kontaktbereich im Wesentlichen im Bereich der Umbiegungsstelle des U-förmigen Halteelements auf der Leiste aufliegt. Die Umbiegungsstelle weist eine erhöhte Stabilität auf Grund ihrer Geometrie und/oder einer Materialverdickung auf, so dass auch bei einer großen Kraft die auf das Unterstützungselement und somit auf das Halteelement wirkt, keine Beschädigungen des Halteelements auftreten.

Bevorzugt wird auch in der zweiten Ausführungsform das Unterstützungselement durch ein Sicherungsmittel gesichert. In der zweiten Ausführungsform ist das Sicherungsmittel bevorzugt ein wandartiges Bauteil, beispielsweise ein Blech, welches mit dem Halteelement in Kontakt steht. Durch das Sicherungsmittel wird verhindert, dass das Unterstützungselement in Z-Richtung von der Leiste rutscht. Weiterhin bevorzugt steht das Unterstützungselement seitlich von der Sitzstruktur des Mittelsegmentsitzes ab. Das Unterstützungselement wird hierbei jedoch von den Polsterteilen des Mittelsegmentsitzteils und des Sitzteils des zweiten Segments verdeckt, so dass kein Verletzungsrisiko für Fahrzeuginsassen besteht. Durch das abstehende Unterstützungselement kann dieses jedoch vorteilhaft auch als Griff verwendet werden, wenn das Mittelsegmentsitzteil in die Verstaustellung überführt werden soll.

Bevorzugt wird der Fahrzeugsitz nach der (nicht zur Erfindung gehörenden) ersten oder nach der (erfindungsgemäss) zweiten Ausführungsform als Rücksitzbank in einem Fahrzeug verwendet. Ganz besonders bevorzugt kann der erfindungsgemäße Fahrzeugsitz als Mittelsitzbank in einem Fahrzeug mit drei Fahrzeugsitzreihen vorgesehen sein.

Im nachfolgenden werden die beiden o.g. Ausführungsformen anhand von Figuren erläutert. Die Erläuterungen sind lediglich beispielhaft und schränken den allgemeinen Erfindungsgedanken nicht ein.
- **Figur 1**: stellt schematisch einen Fahrzeugsitz dar.
- **Figur 2**: stellt schematisch Sitzteile des Fahrzeugsitzes dar.
- **Figur 3**: stellt schematisch ein erstes Segment des Fahrzeugsitzes und ein Mittelsegmentsitzteil dar.
- **Figur 4**: stellt schematisch einen Fahrzeugsitz nach dem Stand der Technik dar.
- **Figuren 5a bis 5d**: stellen schematisch eine erste, zur Erfindung nicht gehörenden Ausführungsform des Fahrzeugsitzes mit Sicherungsmitteln dar.
- **Figuren 6a bis 6g**: stellen schematisch eine zweite, erfindungsgemässe Ausführungsform des Fahrzeugsitzes mit einem Bügel als Unterstützungselement dar.

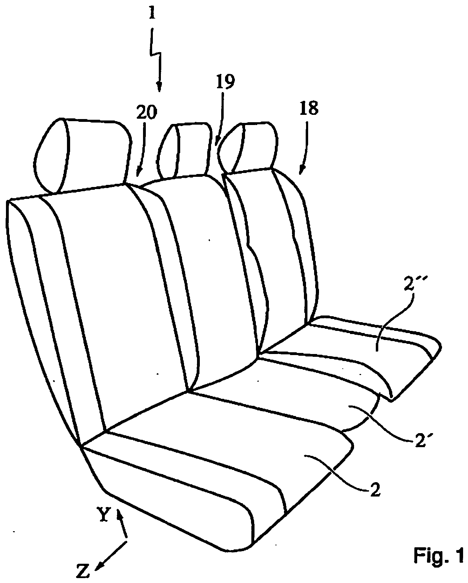

In der Figur 1 ist schematisch ein Fahrzeugsitz 1 in einer Gebrauchsstellung dargestellt, wobei es sich bevorzugt um eine Rücksitzbank eines Kraftfahrzeuges handelt. Der Fahrzeugsitz 1 weist ein erstes Segment 20, ein zweites Segment 18 und ein Mittelsegment 19 auf. Jedes Segment 18, 19, 20 weist bevorzugt ein Sitzteil 2", 2', 2 und eine Rückenlehne auf.

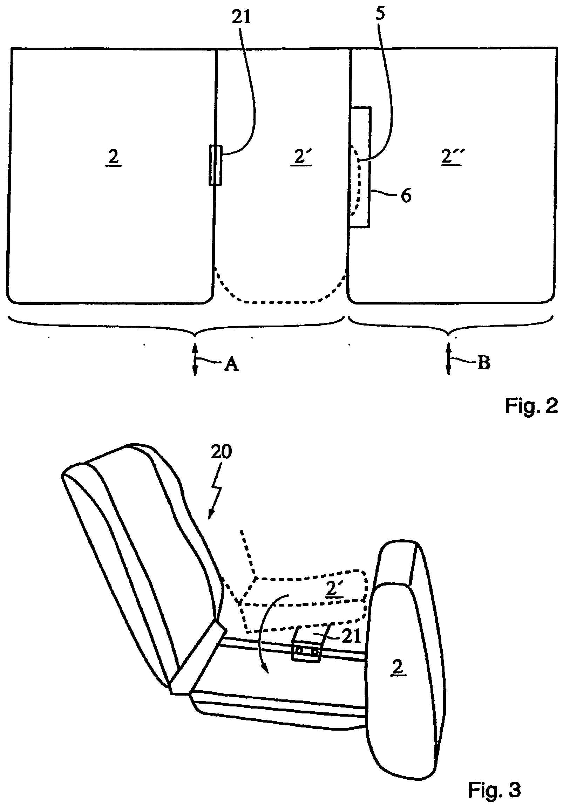

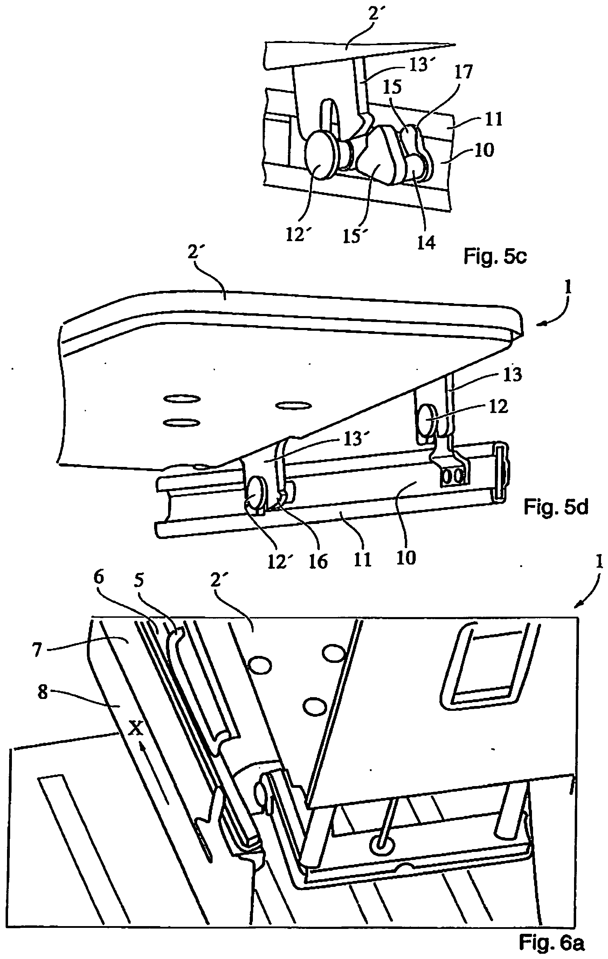

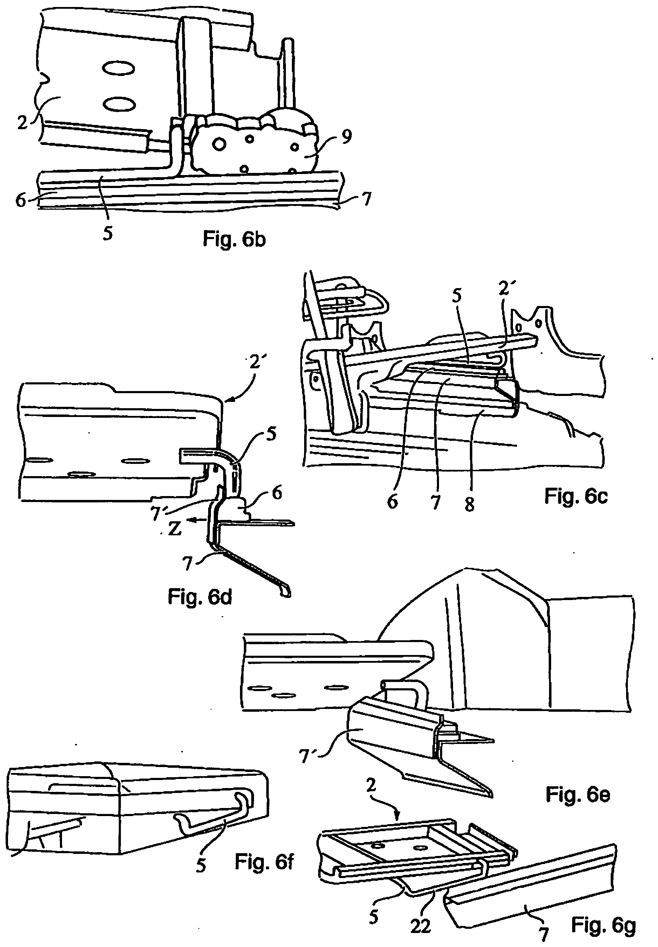

Wie in Figur 2 schematisch dargestellt, ist das Mittelsegmentsitzteil 2' mittels eines schematisch dargestellten Schwenkmechanismus 21 mit dem Sitzteil 2 des ersten Segments 20 verbunden. Wird das Sitzteil 2 des ersten Segments 20 zur Komfortverbesserung nach vorne oder nach hinten längsverstellt - wie durch den Pfeil A dargestellt - wird das Mittelsegmentsitzteil 2' mitverschoben. Im Wesentlichen unabhängig von der Verschiebung des Mittelsegmentsitzteils 2' und des Sitzteils 2 des ersten Segments 20 kann das Sitzteil 2" des zweiten Segments 18 nach vorne oder nach hinten verschoben werden (Pfeil B). Damit das Mittelsegmentsitzteil 2' trotzdem von dem Sitzteil 2" beziehungsweise von der Sitzstruktur des zweiten Segments 18 gestützt wird, weist das Mittelsegmentsitzteil 2' in Figur 2 ein Unterstützungselement 5 auf. Das Unterstützungselement 5 liegt dabei in diesem Ausführungsbeispiel (siehe zweite Ausführungsform Figuren 6a bis 6g) auf einer Leiste 6 auf. Wird das Mittelsegmentsitzteil 2' und/oder das Sitzteil 2" des zweitens Segments 18 verschoben, so verschiebt sich das Unterstützungselement 5 auf der Leiste 6 und/oder die Leiste 6 verschiebt sich.

In Figur 3 sind schematisch das erste Segment 20 und das Mittelsegmentsitzteil 2' dargestellt. Das Sitzteil 2 des ersten Segments 20 ist senkrecht verklappt worden, so dass ein unterhalb des Sitzteils 2 vorliegender Stauraum zugänglich wird. In diesen Stauraum kann dann das Mittelsegmentsitzteil 2' mittels des Schenkmechanismus 21 geklappt werden. Der Schwenkmechanismus 21 ist beispielweise ein Scharnier, welches das Mittelsegmentsitzteil in der Gebrauchsstellung zumindest einseitig unterstützt beziehungsweise hält und mit dem Sitzteil 2 des ersten Segments 20 verbindet.

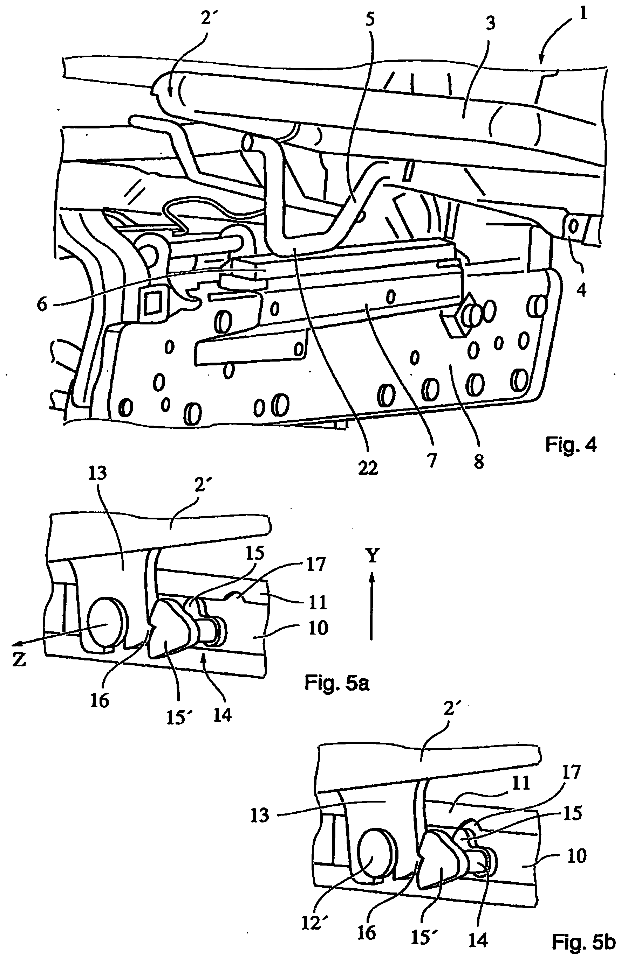

In Figur 4 ist schematisch ein aus der Praxis vorbekannter Fahrzeugsitz 1 dargestellt. Er besteht aus einem zur Seite wegklappbaren Sitzteil 2', von dem in der Figur 4 die Rohrstruktur 3 gezeigt ist. An dem dem Gelenk 4 gegenüberliegenden Seitenholm der Rohrstruktur 3 ist ein Bügel als Unterstützungselement 5 angeordnet, der mit seinen nach oben ragenden Schenkeln mit der Rohrstruktur 3 verschweißt ist. Die Unterseite des Bügels 5 liegt verschiebbar auf einer Dämpfungsleiste 6 aus Kunststoff oder Elastomer auf, welche über eine metallische Halterung 7 mit der Konsole 8 des Fahrzeugsitzes 1 verbunden ist. Die Halterung 7 kann dabei auch als Halteelement 7 bezeichnet werden und die Dämpfungsleiste 6 als Leiste 6. Die Unterkonstruktion 8, die Halterung 7 und die Leiste 6 bilden mit oder ohne anderen Teilen eine Sitzstruktur. Der Kontaktbereich 22 des Bügels 5 ist nach dem Stand der Technik sehr kurz ausgebildet, so dass bei bestimmten Stellungen des Mittelsegmentsitzteils 2' gegenüber dem Sitzteil 2" des zweiten Segments 18 kaum Kontaktbereich 22 auf der Leiste 6 aufliegt. Ist beispielsweise das Mittelsegmentsitzteil 2' in seiner vordersten Position der Längsverstellung und das Sitzteil 2" des zweiten Segments 18 in seiner hintersten Position der Längsverstellung verschoben (statisch ungünstigste Sitzeinstellung), so liegt kaum Kontaktbereich 22 auf der Leiste 6 auf. In diesem Fall kann das Mittelsegmentsitzteil 2' nicht sicher durch den Bügel 5 abgestützt werden. Dieser vorbekannte Fahrzeugsitz 1 soll daher erfindungsgemäß verbessert werden.

In den Figuren 5a bis 5d wird ein erster verbesserter Fahrzeugsitz 1 gezeigt. Die Figuren 6a bis 6g betreffen eine Ausführung der Erfindung.

Bei der Ausführungsform gemäß den Figuren 6a bis 6g soll die Sitzstruktur im Wesentlichen dem vorbekannten Fahrzeugsitz aus Figur 4 entsprechen. Wie aus den Figuren 6a, 6g und 6f ersichtlich, wurde jedoch die Länge (Ausdehnung in X-Richtung) des Bügels 5 (als Unterstützungselement 5) und damit die größtmögliche Auflagefläche beziehungsweise der größtmögliche Kontaktbereich 22 auf der Dämpfungsleiste 6 auf etwa 40 bis 60%, insbesondere etwa 50% der Länge der Sitzstruktur des Sitzteils 2" des zweiten Segments 18 verlängert. Dämpfungsleiste 6 und Bügel 5 sind so zueinander abgestimmt, dass auch bei einer statisch ungünstigen Sitzeinstellung noch mindestens die Hälfte des Bügels 5 auf der Dämpfungsleiste 6 aufliegt, jedoch seitlich über das Sitzteil 2 hinaus steht (Figur 6f, 6d). Die Dämpfungsleiste 6 erstreckt sich im Wesentlichen über die gesamte Länge der Konsole 8. Die Schweißung des Bügels 5 ist so ausgeführt, dass keine Kollision mit einem Getriebe 9 der Sitzverstellung auftritt (Figuren 6a, 6b). Das hintere Ende des Bügels 5 ist dabei von der Seite her in eine Ausnehmung der Struktur des Sitzteils 2 eingesteckt und verschweißt, während das vordere Ende des Bügels 5 quer zur Sitzrichtung gebogen und von unten auf die Struktur aufgeschweißt ist. Eine Halterung beziehungsweise ein Halteelement 7 besteht aus einem U-förmig gekantetem Blech, auf dessen Schenkel der Bügel 5 nahe der Basis des "U"s auf der Leiste 6 aufliegt. Ein den Bügel 5 hintergreifendes Blech 7' der Halterung 7 sichert die Auflage gegen ein Verrutschen des Bügels 5 in Z-Richtung. Das Blech 7' kann daher auch als Sicherungsmittel 7' bezeichnet werden. Das Halteelement 7, das Sicherungsmittel 7', die Leiste 6 und die Konsole 8 sind bevorzugt an der Sitzstruktur des zweiten Segments 18 angebracht oder bilden diese aus.

Bei der o.g. ersten, zur Erfindung nicht gehörenden Ausführungsform gemäß der Figuren 5a bis 5d ist das Sitzteil 2' des Mittelsegments 19 des Fahrzeugsitzes 1 an der betreffenden Seite lösbar an einem Schlitten 10 einer Schiene 11 geführt und mit dieser über seitlich aus dem Schlitten 10 auskragende Pilzköpfe 12, 12' verbunden (Figur 5d). Auf die Schäfte dieser Pilzköpfe 12, 12' werden Gabeln 13, 13' des Sitzteils 2' des Mittelsegments 19 aufgesteckt und durch das in Figur 5a bis 5c gezeigte Verriegelungssystem lösbar gesichert. Die Schiene 11 kann auch als Führungsschiene 11 bezeichnet werden und ist bevorzugt an der Sitzstruktur des zweiten Segments 18 angeordnet. Die Gabeln 13, 13' können auch als Unterstützungselement 13, 13' bezeichnet werden und sind bevorzugt mit der Sitzstruktur des Mittelsegmentsitzteils 2' verbunden. Durch die Köpfe der Pilzköpfe 12, 12' werden die Gabeln 13, 13' an einer Bewegung in Z-Richtung gehindert, so dass die Pilzköpfe 12, 12' als zweites Sicherungsmittel 12, 12' bezeichnet werden können.

Die Schiene 11 hat eine etwa C-förmige Gestalt und umgreift den Schlitten 10, welcher im Wesentlichen als hochkant stehendes Flachprofil ausgebildet ist. Auf dem Schlitten 10 ist nahe des hinteren Pilzkopfes 12' ein Doppelnocken 14 um eine horizontale Achse drehbar gelagert, wobei sich ein erster Nockenteil 15 gegen die Schiene 11 spannt, während ein zweiter Nockenteil 15' von oben auf einer Nase 16 der Gabel 13' aufliegt und diese auf dem Pilzkopf 12' verriegelt (Figur 5a). Die Nase 16 und der erste Nockenteil 15 gehen dabei eine form- und/oder kraftschlüssige Verbindung ein und verhindern eine Bewegung der Gabel 13' in Y-Richtung. In einer vorgegebenen Schiebestellung des Fahrzeugsitzes (Figur 5b), beziehungsweise des Mittelsegmentsitzteils 2' und des Sitzteils 2" des zweiten Segments 18 kommt der erste Nockenteil 15, beispielsweise angetrieben durch ein Federmittel, in Überdecktang mit einer Kerbe 17 in der Schiene 11, so dass der Doppelnocken 14 in eine die Gabel 13' freigebende Stellung verdreht werden kann (Figur 5c). Das Mittelsegmentsitzteil 2' kann nun seitlich verklappt werden. Beim erneuten Aufsetzen des Mittelsegmentsitzteils 2' und Verstellen des Schlittens 10 in der Schiene 11 erfolgt selbsttätig eine Verriegelung des Systems.

### Bezugszeichenliste

- 1: Fahrzeugsitz
- 2: Sitzteil erstes Segment
- 2': Sitzteil Mittelsegment, Mittelsegmentsitzteil
- 2": Sitzteil zweites Segment
- 3: Rohrstruktur
- 4: Gelenk
- 5: Unterstützungselement/Bügel
- 6: Leiste/Dämpfungsleiste
- 7: Halteelement/Halterung
- 8: Konsole
- 9: Getriebe
- 10: Schlitten
- 11: Führungsschiene/Schiene
- 12: zweites Sicherungsmittel/Pilzkopf/Pilzkopf-Bolzen
- 12': zweites Sicherungsmittel/Pilzkopf/Pilzkopf-Bolzen
- 13: Unterstützungselement/Gabel
- 13': Unterstützungselement/Gabel
- 14: erstes Sicherungsmittel/Doppelnocken
- 15: erster Nockenteil
- 15': zweiter Nockenteil
- 16: Nase (Gabel)
- 17: Kerbe (Führungsschiene)
- 18: zweites Segment
- 19: Mittelsegment
- 20: erstes Segment
- 21: Schwenkmechanismus
- 22: Kontaktbereich (Bügel)
- A: Richtungspfeil
- B: Richtungspfeil

## Patentansprüche

1. Fahrzeugsitz (1) mit mindestens einem ersten Segment (20), einem zweiten Segment (18) und einem Mittelsegment (19), wobei das erste Segment (20), das zweite Segment (18) und das Mittelsegment (19) jeweils ein Sitzteil (2, 2', 2") aufweisen und das Sitzteil (2') des Mittelsegments (19) unter dem Sitzteil (2) des ersten Segments (20) in einer Verstaustellung verstaubar ist und das Mittelsegment (19) mit dem ersten Segment (20) in einer Gebrauchsstellung verbunden ist, wobei das Mittelsegment (19) ein Unterstützungselement (13, 13', 5) aufweist mittels dessen das Mittelsegment (19) mit dem zweiten Segment (18) in der Gebrauchsstellung in Kontakt steht und wobei das Sitzteil (2) des ersten Segments (20) zusammen mit dem Sitzteil (2') des Mittelsegments (19) gegenüber dem Sitzteil (2") des zweiten Segments (18) längsverschiebbar ist und sich das Unterstützungselement (5) mit einem Kontaktbereich (22) auf einer Leiste (6) des Fahrzeugsitzes (1) abstützt, wobei bei jeder einzunehmenden Längsverstellposition des Sitzteils (2') des Mittelsegments (19) und des Sitzteils (2") des zweiten Segments (18) mindestens in etwa die Hälfte des Kontaktbereichs (22) auf der Leiste (6) aufliegt, wobei das Unterstützungselement (5) eine Bügelform aufweist, **dadurch gekennzeichnet, dass** die Unterseite des Bügels des Unterstützungselements (5) verschiebbar auf der Leiste (6) aufliegt.

2. Fahrzeugsitz (1) nach Anspruch 1, **dadurch gekennzeichnet, dass** die Länge des Kontaktbereichs (22) in etwa der Hälfte der Länge der Sitzstruktur des zweiten Segments (18) entspricht.

3. Fahrzeugsitz (1) nach Anspruch 1 oder 2, **dadurch gekennzeichnet, dass** die Sitzstruktur des zweiten Segments (18) ein Halteelement (7) und ein Sicherungsmittel (7') aufweist und das Halteelement (7) die Leiste (6) aufweist.

4. Fahrzeugsitz (1) nach einem der Ansprüche 1 bis 3, **dadurch gekennzeichnet, dass** die Leiste (6) Dämpfungseigenschaften aufweist.

5. Fahrzeugsitz (1) nach Anspruch 3 oder nach Anspruch 4, soweit er auf Anspruch 3 rückbezogen ist, **dadurch gekennzeichnet, dass** das Halteelement (7) im Wesentlichen U-förmig ist und das Unterstützungselement (5) auf der Leiste (6) im Bereich der Umbiegungsstelle des U-förmigen Halteelements (7) angeordnet ist.

6. Fahrzeugsitz (1) nach einem der Ansprüche 1 bis 5, **dadurch gekennzeichnet, dass** das Unterstützungselement (5) seitlich von der Sitzstruktur des Mittelsegments (19) absteht.

7. Verwendung eines Fahrzeugsitzes gemäß einem der vorhergehenden Ansprüche als Rücksitzbank in einem Kraftfahrzeug.

## Claims

1. Vehicle seat (1) comprising at least one first segment (20), a second segment (18) and a central segment (19), the first segment (20), the second segment (18) and the central segment (19) respectively comprising a seat part (2, 2', 2") and the seat part (2') of the central segment (19) being able to be stowed under the seat part (2) of the first segment (20) in a stowage position and the central segment (19) being connected to the first segment (20) in a position of use, the central segment (19) comprising a support element (13, 13', 5) by means of which the central segment (19) is in contact with the second segment (18) in the position of use and the seat part (2) of the first segment (20) together with the seat part (2') of the central segment (19) being longitudinally displaceable relative to the seat part (2") of the second segment (18), and the support element (5) being supported with a contact region (22) on a strip (6) of the vehicle seat (1), in each longitudinally adjusted position of the seat part (2') of the central segment (19) to be adopted, and of the seat part (2") of the second segment (18) at least approximately half of the contact region (22) bearing on the strip (6), the support element (5) having the shape of a leg, **characterized in that** the underside of the leg of the support element (5) bears displaceably on the strip (6).

2. Vehicle seat (1) according to Claim 1, **characterized in that** the length of the contact region (22) corresponds approximately to half the length of the seat structure of the second segment (18).

3. Vehicle seat (1) according to Claim 1 or 2, **characterized in that** the seat structure of the second segment (18) comprises a retaining element (7) and has a securing device (7'), and the retaining element (7) comprises the strip (6).

4. Vehicle seat (1) according to one of Claims 1 to 3, **characterized in that** the strip (6) has damping properties.

5. Vehicle seat (1) according to Claim 3 or according to Claim 4 insofar as it refers back to Claim 3, **characterized in that** the retaining element (7) is substantially U-shaped, and the support element (5) is arranged on the strip (6) in the region of the bending point of the U-shaped retaining element (7).

6. Vehicle seat (1) according to one of Claims 1 to 5, **characterized in that** the support element (5) protrudes laterally from the seat structure of the central segment (19).

7. Use of a vehicle seat according to one of the preceding claims as a rear seat bench in a motor vehicle.

## Revendications

1. Siège de véhicule (1) comprenant au moins un premier segment (20), un deuxième segment (18) et un segment central (19), le premier segment (20), le deuxième segment (18) et le segment central (19) présentant chacun une partie de siège (2, 2', 2'') et la partie de siège (2') du segment central (19) pouvant être rangée sous la partie de siège (2) du premier segment (20) dans une position de rangement et le segment central (19) étant raccordé au premier segment (20) dans une position d'utilisation, le segment central (19) présentant un élément de support (13, 13', 5) au moyen duquel l'élément central (19) est en contact avec le deuxième segment (18) dans la position d'utilisation, et la partie de siège (2) du premier segment (20) conjointement avec la partie de siège (2') du segment central (19) pouvant être déplacées en longueur par rapport à la partie de siège (2'') du deuxième segment (18) et l'élément de support (5) s'appuyant avec une région de contact (22) sur une barre (6) du siège de véhicule (1), dans chaque position de réglage en longueur devant être adoptée par la partie de siège (2') du segment central (19) et la partie de siège (2'') du deuxième segment (18), au moins approximativement la moitié de la région de contact (22) reposant sur la barre (6), l'élément de support (5) présentant une forme en étrier, **caractérisé en ce que** le côté inférieur de l'étrier de l'élément de support (5) repose de manière déplaçable sur la barre (6).

2. Siège de véhicule (1) selon la revendication 1, **caractérisé en ce que** la longueur de la région de contact (22) correspond approximativement à la moitié de la longueur de la structure de siège du deuxième segment (18).

3. Siège de véhicule (1) selon la revendication 1 ou 2, **caractérisé en ce que** la structure de siège du deuxième segment (18) présente un élément de retenue (7) et un moyen de fixation (7') et l'élément de retenue (7) présente la barre (6).

4. Siège de véhicule (1) selon l'une quelconque des revendications 1 à 3, **caractérisé en ce que** la barre (6) présente des propriétés d'amortissement.

5. Siège de véhicule (1) selon la revendication 3 ou selon la revendication 4 lorsqu'elle se rapporte à la revendication 3, **caractérisé en ce que** l'élément de retenue (7) est essentiellement en forme de U et l'élément de support (5) est disposé sur la barre (6) dans la région de la courbure de l'élément de retenue en forme de U (7).

6. Siège de véhicule (1) selon l'une quelconque des revendications 1 à 5, **caractérisé en ce que** l'élément de support (5) fait saillie latéralement depuis la structure de siège du segment central (19).

7. Utilisation d'un siège de véhicule selon l'une quelconque des revendications précédentes, en tant que banquette de siège arrière dans un véhicule automobile.
